# EUROPEAN PATENT APPLICATION

(11) **EP 0 735 777 A2**
(43) Date of publication of application: **02.10.1996**
(21) Application number: 96302037.5
(22) Date of filing: 25.03.1996
(51) Int. Cl.: H04N 7/50

(54) **Cue-adaptive video encoding method and apparatus**

(30) Priority: 27.03.1995 JP 66628/95
(71) Applicant: SONY CORPORATION, Tokyo (JP)
(72) Inventor: Kitazato, Naohisa, Shinagawa-ku, Tokyo (JP)
(74) Representative: Nicholls, Michael John

(57) **Abstract**

A picture compression apparatus includes a frame order conversion section (2) for converting the order of frames of a picture signal based on picture type data, a picture coding section (4) for performing coding of the picture signal including inter-frame predictive coding based on the picture type data, a buffer memory (5) for outputting the coded picture signal as data of a fixed bit rate, a DSP circuit (7) for controlling the buffer memory (5), and a picture type production section (6) for producing the picture type data and producing, when a cue signal is received, picture type data for producing a data group which can be decoded independently of preceding frames to a subsequent frame or frames of the picture signal.

## Description

This invention relates to a picture compression method and a picture compression apparatus wherein picture type data is allocated to each frame of a picture signal and coding is performed based on the picture type data to compress the picture signal.

A picture compression method is conventionally known wherein picture type data is allocated to each frame of a picture signal and the picture signal is coded principally by inter-frame predictive coding based on the picture type data. In the allocation of picture type data, a fixed sequence of data is repetitively allocated, and a single data group is formed for each cycle of the sequence data. Each data group can be decoded independently without relying upon any other data group. Consequently, even if a breakdown of data occurs in a certain data group, the breakdown of data has no influence on any other data group.

In the picture compression method described above, there is no problem when successive picture signals are coded successively. However, when it is desired, for example, to cut out a portion of successive picture signals, code the thus cut out picture signal and store the coded picture signal into a digital storage medium, it is impossible to arbitrarily select a frame to be cut out. This is because, if a picture is cut out in an intermediate frame of a data group, then appropriate decoding is difficult, and consequently, the cutting out timing can be selected only at the top of each data group.

Further, when a plurality of cut out picture signals are stored into a digital storage medium and then are to be reproduced successively, a buffer memory on the reproduction side may possibly overflow. In particular, at a point of time between successive cut out picture signals, the buffer memory occupation amount, that is, the occupied amount of the buffer memory, at a start point of time of the next or second cut out picture signal is determined based on the buffer memory occupation amount at an end point of time of the precedent or first cut out picture signal. Accordingly, where the buffer memory occupation amount at the end point of the precedent cut out picture signal is great, if also the buffer memory occupation amount at the start point of the next cut out picture signal is great, then the possibility that the buffer memory may overflow becomes very high.

It is an aim of the applicant to provide a picture compression method and a picture compression apparatus wherein a picture signal can be cut out from an arbitrary frame thereof without disturbing decoding of the picture signal.

It is another aim of the applicant to provide a picture compression apparatus wherein, when a plurality of cut out picture signals are successively reproduced, the possibility that a buffer memory on the reproduction side may overflow is minimized.

According to one aspect of the present invention there is provided a picture compression method wherein picture type data representative of a prediction structure is allocated to each frame of a picture signal and coding including inter-frame predictive coding is performed based on the picture type data, characterized in that, in response to a cue signal, picture type data for producing a data group which can be decoded independently of preceding frames are allocated to a subsequent frame or frames of the picture signal.

In the picture compression method, if a cue signal is produced or received at a desired picture cutting out point, then picture type data for producing a data group which can be decoded independently of preceding frames is allocated to a frame corresponding to the cutting out point. Accordingly, the picture compression method is advantageous in that the picture signal can be cut out freely from an arbitrary frame thereof without making an obstacle to decoding of the picture signal. Further, improvement in picture quality can be achieved without detection of a scene change.

The picture type data may represent an intra-picture, a predictive-picture or a bidirectionally predictive-picture.

According to another aspect of the present invention, there is provided a picture compression apparatus which includes a picture type production section for allocating picture type data representative of a prediction structure to each frame of a picture signal, and a picture coding section for performing coding of the picture signal including inter-frame predictive coding based on the picture type data, characterized in that, in response to a cue signal, the picture type production section allocates picture type data for producing a data group which can be decoded independently of preceding frames to a subsequent frame or frames of the picture signal.

In the picture compression apparatus, if a cue signal is produced or received at a desired picture cutting out point, then picture type data for producing a data group which can be decoded independently of preceding frames is allocated to a frame corresponding to the cutting out point. Accordingly, the picture compression method is advantageous in that the picture signal can be cut out freely from an arbitrary frame thereof without making an obstacle to decoding of the picture signal. Further, improvement in picture quality can be achieved without detection of a scene change.

The picture type data may represent an intra-picture, a predictive-picture or a bidirectionally predictive-picture.

According to a further aspect of the present invention, there is provided a picture compression apparatus which includes a picture type production section for allocating picture type data representative of a prediction structure to each frame of a picture signal, a picture coding section for performing coding of the picture signal including inter-frame predictive coding based on the picture type data, a buffer memory for storing a compressed picture signal from the picture coding section, and a buffer memory control section for controlling writing into the buffer memory and controlling reading out of the buffer memory so that the compressed picture signal stored in the buffer memory may be outputted as data of a fixed rate, characterized in that, after a video clip coding mode is selected, the buffer memory control section controls the buffer memory so that a storage capacity of the buffer memory is set to a minimum necessary level and the buffer memory control section stops writing into and reading out of the buffer memory and then stands by.

In the picture compression apparatus, if a video clip coding mode is selected, then the buffer memory stands by with the storage capacity of the buffer memory reduced to the minimum necessary level. Consequently, the buffer memory occupation amount at a start point of the picture signal (cut out picture) inputted later normally exhibits the minimum necessary level. Accordingly, the picture compression apparatus is advantageous in that, when cut out pictures by the picture compression apparatus are reproduced successively, the possibility that the buffer memory on the reproduction side may overflow is minimized.

Preferably, the picture compression apparatus is further characterized in that, after a cue signal is outputted when the picture compression apparatus is in the video clip coding mode, the picture type production section allocates picture type data for producing a data group which can be decoded independently of preceding frames to a subsequent frame or frames of the picture signal. In the picture compression apparatus, when a cue signal is developed or received at a desired picture cutting out point while the buffer memory stands by, picture data for producing a data group which can be decoded independently of preceding frames is allocated to a frame corresponding to the cutting out point. Consequently, the buffer memory occupation amount at a start point of the picture signal (cut out picture) always exhibits the minimum necessary level. Accordingly, the picture compression apparatus is advantageous in that, when cut out pictures by the picture compression apparatus are reproduced successively, the possibility that the buffer memory on the reproduction side may overflow is minimized.

The picture type data may represent an intra-picture, a predictive-picture or a bidirectionally predictive-picture.

The above and other features and advantages of the present invention will become apparent from the following description and the appended claims, taken in conjunction with the accompanying drawings in which like parts or elements are denoted by like reference characters. In the accompanying drawings:
FIG. 1 is a block diagram of a picture compression apparatus to which the present invention is applied;
FIG. 2 is a block diagram of a frame order conversion section of the picture compression apparatus of FIG. 1;
FIG. 3 is a diagrammatic view illustrating frame order conversion performed by the picture compression apparatus of FIG. 1;
FIG. 4 is a block diagram of a picture coding section of the picture compression apparatus of FIG. 1;
FIG. 5 is a diagrammatic view illustrating a relationship between picture types and data groups in the picture compression apparatus of FIG. 1;
FIG. 6 is a flow chart illustrating operation of the picture compression apparatus of FIG. 1 when the picture compression apparatus is in a video clip coding mode;
FIG. 7 is a diagram illustrating a variation in amount of information stored in a buffer memory of picture compression apparatus of FIG. 1 when the picture compression apparatus is in a video clip coding mode;
FIG. 8 is a diagrammatic view illustrating resetting of a picture type production section of the picture compression apparatus of FIG. 1; and
FIG. 9 is a diagrammatic view illustrating a relationship between picture types and predictions.

A picture compression apparatus to which the present invention is applied utilizes a correlation between frames upon compression of a digital picture signal and achieves compression in amount of data using coding which includes a combination of DCT (discrete cosine transform) and motion compensation prediction and variable length coding (VLC).

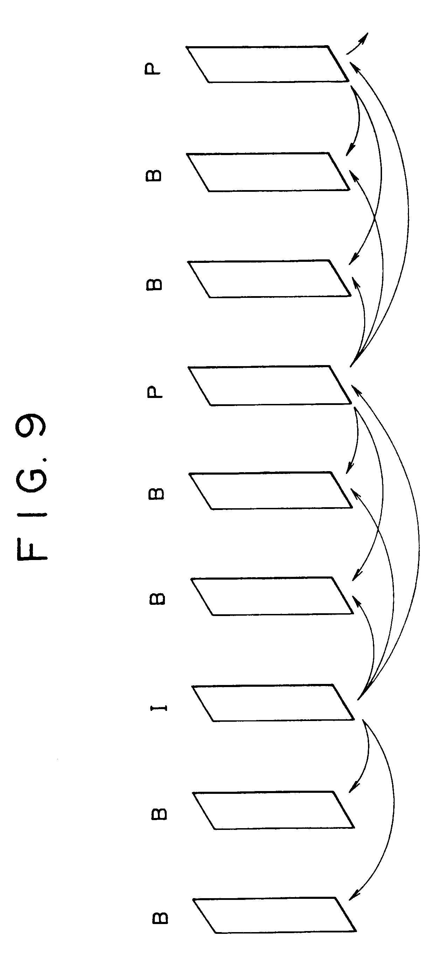

Referring first to FIG. 9, there is illustrated a relationship between picture types of frames and predictions of them. Based on the relationship, identification data called picture type is provided to each frame. As such picture types, there are three types of an I-picture (Intra-Picture), a P-picture (Predictive-Picture) and a B-picture (Bidirectionally Predictive Picture). An I-picture is not predicted from any other frame, and DCT ot it is performed using only a picture signal in a same frame. This is called intra-frame coding. A P-picture is a frame which can be predicted from an I-picture or a P-picture immediately prior to it (such prediction is called forward prediction). A B-picture can be predicted from an I-picture or pictures or/and a P-picture or pictures immediately preceding and following it. Consequently, a B-picture can be predicted not only by forward prediction but also by prediction from a rear frame (called backward prediction) or prediction from both of preceding and following frames (called bidirectional prediction).

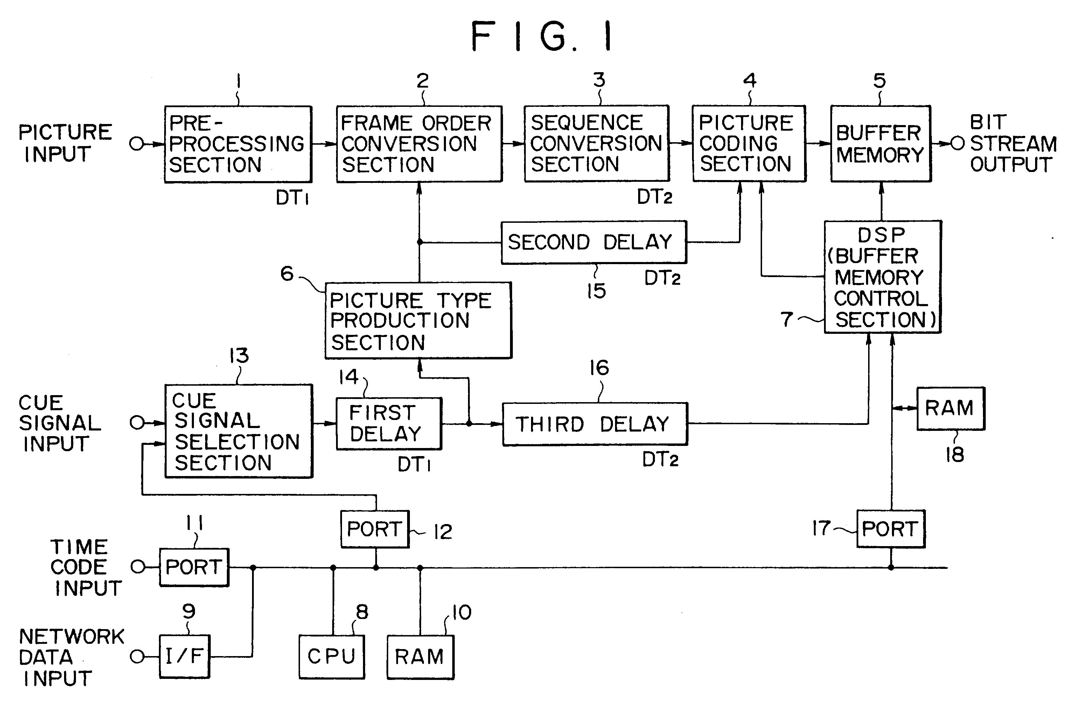

The picture compression apparatus to which the present invention is applied is shown in block diagram in FIG. 1. Referring to FIG. 1, a signal processing system for a picture signal as a controlled system of the picture compression apparatus will be described first. A digital picture signal is supplied to a pre-processing section 1 which includes a frame synchronizer section, a resolution conversion section, a telecine signal detection section, a color signal format conversion section and a scan conversion section (not shown) built therein. The received picture signal is first synchronized with a frame synchronizing signal by the frame synchronizer section. Then, the number of pixels in a horizontal direction of the picture signal is reduced by sampling to compress the picture signal at a desired ratio by the resolution conversion section. When the picture signal is a telecine signal, the telecine signal detection section returns the picture signal to the telecine signal of an original condition. Further, the color signal format conversion section converts the form of a color signal (Y, R-Y, B-Y) from 4:2:2 to 4:2:0. Then, the scan conversion section converts the picture signal from that of raster scanning for DCT processing to that of block scanning. The delay time required for the processing by the pre-processing section 1 is represented by DT₁.

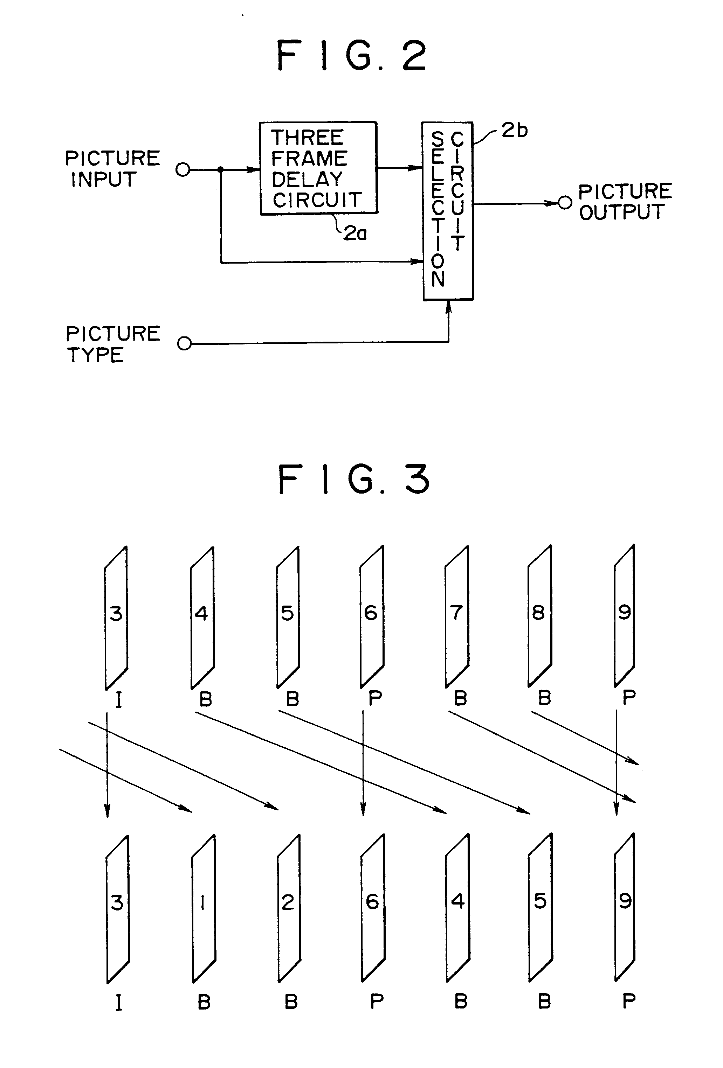

The output picture signal of the pre-processing section 1 is supplied to a frame order conversion section 2. Since a B-picture requires prediction from a frame in the future, the frame order conversion section 2 delays only B-pictures in order to allow the prediction. A detailed circuit construction of the frame order conversion section 2 is shown in FIG. 2.

Referring now to FIG. 2, a picture signal is supplied to a selection circuit 2b on one hand via a three frame delay circuit 2a and on the other hand directly or via another route which does not pass any circuit. The selection circuit 2b selects the delayed picture signal outputted from the three frame delay circuit 2a when picture type data from a picture type production section 6 which will be hereinafter described is a B-picture, but when the picture type data is an I-picture or a P-picture, the selection circuit 2b selects the picture signal which has not been delayed. The selection circuit 2b outputs the thus selected picture signal. Accordingly, from the frame order conversion section 2, a picture signal whose frame order has been converted as shown in FIG. 3 is outputted. A delay by the frame order conversion section 2 of some frames, that is, those frames which have not been delayed by the three frame delay circuit 2a, is not treated as a delay of the signal system.

Referring back to FIG. 1, the output picture signal of the frame order conversion section 2 is supplied to a sequence conversion section 3. The sequence conversion section 3 performs sequence conversion conforming to a picture coding section 4 which will be hereinafter described. The delay time by the sequence conversion section 3 is represented by DT₂. In this instance, the delay time DT₂ is approximately equal to a 1/2 frame. The output picture signal of the sequence conversion section 3 is supplied to the picture coding section 4.

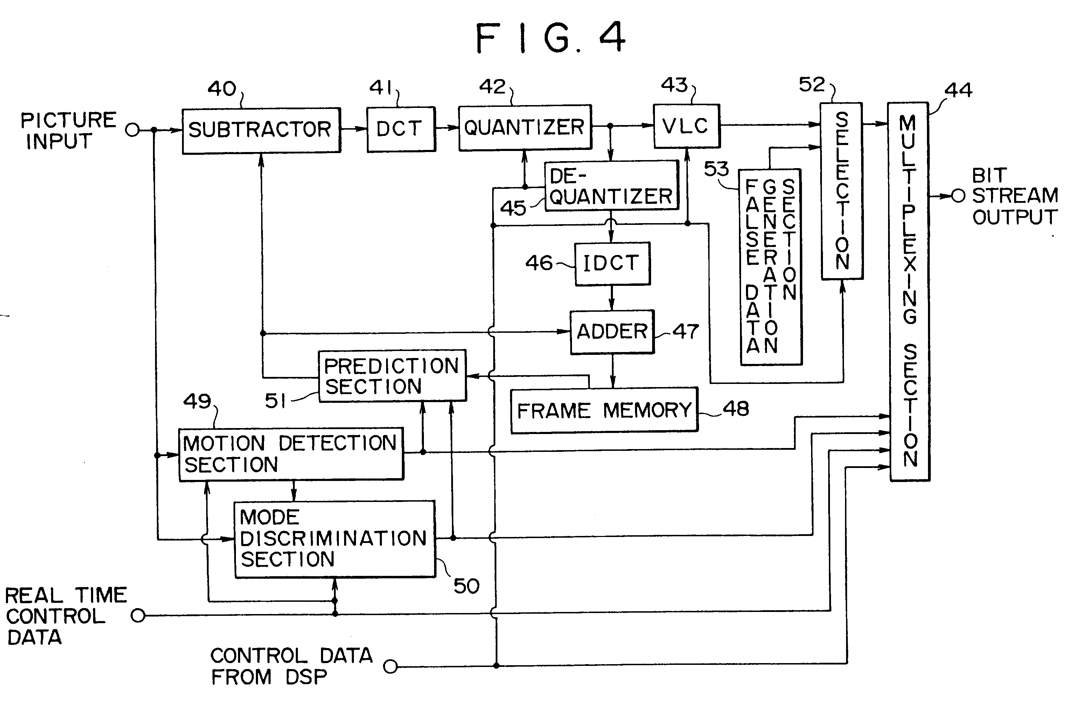

FIG. 4 shows in block diagram a detailed construction of the picture coding section 4. Referring to FIG. 4, an input picture signal is supplied to a subtractor 40. The subtractor 40 subtracts a predictive value which will be hereinafter described from the picture signal. The output of the subtractor 40 is two-dimensional real picture data or predictive error data which is supplied to a DCT coding circuit 41. The DCT coding circuit 41 converts the received data into DCT coefficients of a frequency region n units of a block (for example, 8 × 8 pixels). Here, since pixels make a signal whose low frequency components are high in magnitude, the distribution of DCT coefficients normally has a deviation.

The output of the DCT coding circuit 41 is supplied to a quantizer 42. The quantizer 42 quantizes the received output signal of the DCT coding circuit 41 with control data from a DSP (digital signal processing) circuit 7. The thus quantized signal is supplied to a variable length coding circuit (VLC) 43. The variable length coding circuit 43 variable length codes the received quantized signal based on control data from the DSP circuit 7. Here, the variable length coding assigns, making use of the deviation of DCT coefficients, comparatively short codes to events which are comparatively high in probability in appearance, but assigns comparatively long codes to events which are comparatively low in probability in appearance to finally realize coding of a high frequency.

The picture signal coded by the variable length coding circuit 43 is outputted to a selection circuit 52. To the selection circuit 52, also false data (stuffing data), which is, in the present embodiment, zero data, is supplied from a false data generation section 53. One of the signals is selected by the selection circuit 52 in accordance with control data from the DSP circuit 7 and is outputted to a multiplexing section 44.

The output of the quantizer 42 is supplied also to a dequantizer 45 and then to an IDCT circuit 46. The output of the IDCT circuit 46 and a predictive value which will be hereinafter described are added by an adder 47 to restore a decoded original picture signal. The decoded picture signal is stored into a frame memory 48.

The input picture signal to the picture compression apparatus is supplied also to a motion detection section 49 and a mode discrimination section 50. The motion detection section 49 detects motion of the picture signal in units of a block (for example, 8 × 8 pixels) making use of picture type data (I, P, B) from the picture type production section 6. Then, the motion detection section 49 outputs motion vectors in units of a block to a prediction section 51 and the multiplexing section 44. The motion detection section 49 further outputs an evaluated value for calculation of a motion vector to the mode discrimination section 50. The mode discrimination section 50 analyzes the picture signal and the evaluated value and selects a predictive mode in units of a block in response to the picture type data (I, P, B). More particularly, for I-pictures, the mode discrimination section 50 always selects only intra-frame coding; for P-pictures, the mode discrimination section 50 selects one of intra-frame coding and forward prediction; and for B-pictures, the mode discrimination section 50 selects one of intra-frame coding, forward prediction, backward prediction and bidirectional prediction. The selected predictive mode by the mode discrimination section 50 is outputted to the prediction section 51 and the multiplexing section 44. The prediction section 51 reads out the picture signal from the frame memory 48 and produces a predictive value based on the motion vectors and the predictive mode. When the predictive mode is intra-frame coding, the predictive value is set to zero. Accordingly, in this instance, the output of the subtractor 40 is the actual picture data. But in any other mode, the output of the subtractor 40 is predictive error data.

The multiplexing section 44 receives, in addition to the compressed picture signal, the motion vectors and the predictive mode mentioned above, control data and so forth supplied thereto and multiplexes, based on the control data and so forth, those signals into and outputs a bit stream.

Referring back to FIG. 1 again, the bit stream from the picture coding section 4 is outputted to a buffer memory 5. The buffer memory 5 is controlled in writing and reading out thereof by the DSP circuit 7. Accordingly, the DSP circuit 7 serves also as a buffer memory control section.

Subsequently, a signal processing system for a control signal of the picture compression apparatus will be described. A CPU (central processing unit) 8 communicates with an external apparatus such as a computer via a network interface 9 and fetches a control list which is an aggregate of control data into a RAM (random access memory) 10. Each control data includes, for example, a control time code and cue signal generation data. The control time code indicates a real time at which a cue signal is to be generated.

Meanwhile, time codes of the frame cycle are successively supplied to the CPU 8 via a port 11 in synchronism with the input picture signal. The CPU 8 normally collates a time code to detect whether or not the time code coincides with a control time code in each control data in the RAM 10. When the two time codes coincide with each other in a video clip coding mode of the picture compression apparatus, if the contents of the control are cue signal generation data, then the CPU 8 produces a cue signal. Then, the cue signal is outputted from a port 12 to a cue signal selection section 13. Also a cue signal from the external computer or the like is inputted to the cue signal selection section 13. The cue signal selection section 13 selects and outputs one of the cue signals. In other words, the cue signal selection section 13 can select, as generation means for a cue signal, one of an internal generation mode based on control data and an external generation mode based on an input from an operation button or the like.

The cue signal from the cue signal selection section 13 is supplied to the picture type production section 6 via a first delay circuit 14. The cue signal is further supplied to the DSP circuit 7 via the first delay circuit 14 and a third delay circuit 16.

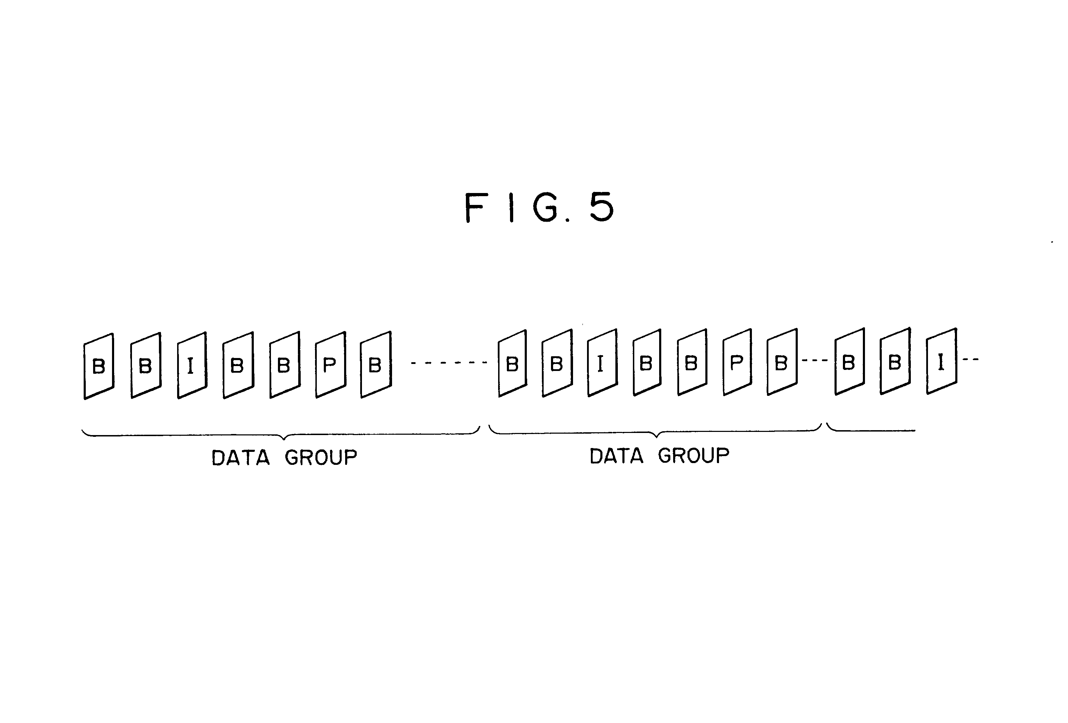

The picture type production section 6 repetitively produces cyclical picture types using a normally free running frame counter. In particular, the contents of the picture type data have a cycle of B, B, I, B, B, P, ..., B, B, P as shown in FIG. 5, and construct a single data group for each one cycle. Since each data group is coded without relying upon frames of any other data group, it can be coded so that it can be decoded independently. The frame counter of the picture type production section 6 is reset in response to a cue signal. As a result of the resetting operation, the order of the picture type data till now is ignored, and the picture type data to be used is returned to the first picture type data of a data group. Further, the picture type production section 6 adds a prediction fixation pulse to each of two picture type data (B, B) to be generated after the resetting operation and outputs the resulted data. Then, the picture type data of the picture type production section 6 is outputted directly to the frame order conversion section 2 and outputted to the picture coding section 4 via a second delay circuit 15.

The delay time of the first delay circuit 14 is set equal to the delay time DT₁ of the pre-processing section 1. Meanwhile, the delay times of the second and third delay circuits 15 and 16 are set to the delay time DT₂ of the sequence conversion section 3 so that a cue signal and picture time data obtained in response to the cue signal are supplied to the associated circuits in synchronism with the picture signal.

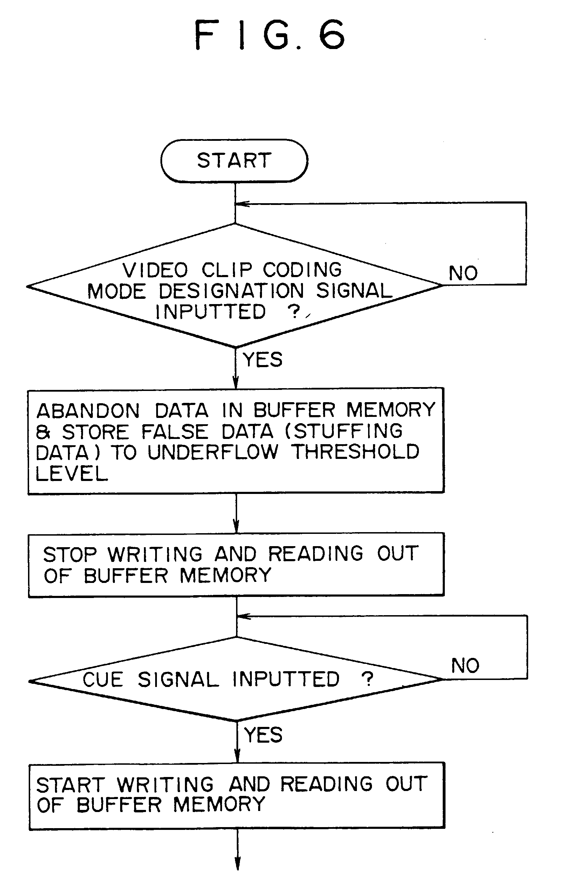

In the meantime, the CPU 8 outputs control data (a type of a quantizer, a bit rate and so forth) to be used only by the picture coding section 4 and the buffer memory 5 to the DSP circuit 7 from a port 17. The DSP circuit (digital signal processing) 7 is a control section which can process at a higher speed than the CPU 8, and stores the control data into a RAM (random access memory) 18 which is under the control of the DSP circuit 7. Further, the DSP circuit 7 executes operation of a flow diagram shown in FIG. 6 when it receives a video clip coding mode instruction from the CPU 8. The operation of the flow diagram will be hereinafter described in detail.

Subsequently, operation of the picture compression apparatus of the construction described above will be described. Control data are stored in advance in the RAMs 10 and 18. An input picture signal is processed by cyclic timing operation or the like by the pre-processing section 1. The picture signal to which such processing has been performed is processed by the frame order conversion section 2 so that the order of frames thereof is converted as shown in FIG. 3 based on picture types supplied from the picture type production section 6. The picture signal having the converted frame order is sequentially sequence converted by the sequence conversion section 3 and then supplied to the picture coding section 4. Here, the coded picture signal and so forth are stored once into the buffer memory 5 and then outputted as a bit stream of a fixed bit rate.

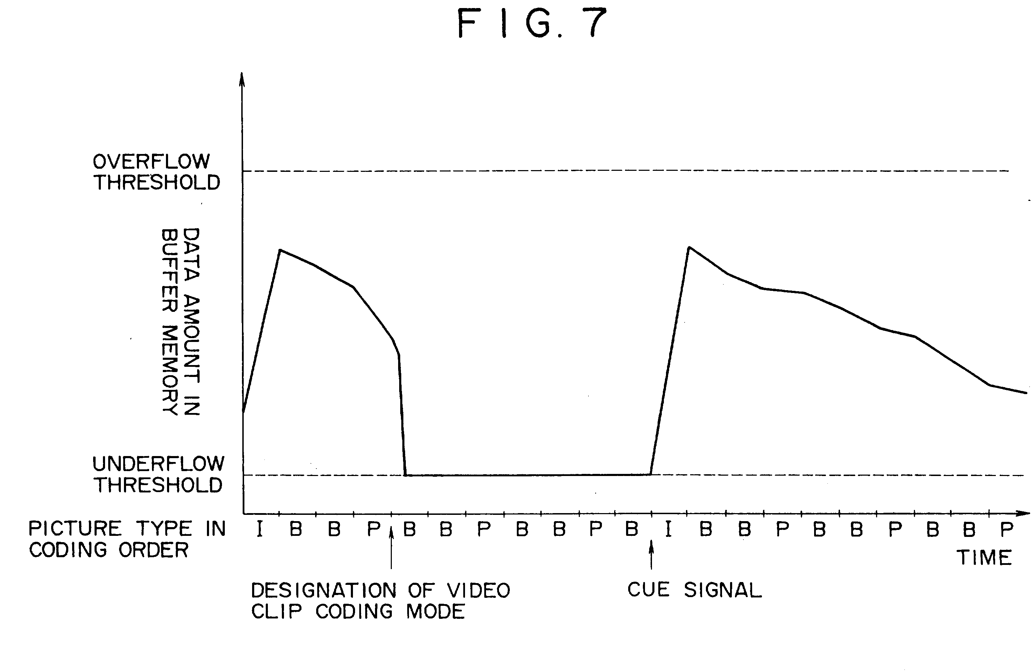

Now, if a video clip coding mode is selected, then the CPU 8 outputs information of such selection to the DSP circuit 7. In response to the information, the DSP circuit 7 abandons the data in the buffer memory 5 by reading out or by some other means as seen in FIGS. 6 and 7. Then, the CPU 8 outputs a control signal so that the selection circuit 52 of the picture coding section 4 may select the false data generation section 53 side and starts writing of false data from the false data generation section 53 into the buffer memory 5. After the false data are written to an underflow threshold level which is a minimum necessary level of the buffer memory 5, the CPU 8 stops writing and reading out of the buffer memory 5 and then stands by.

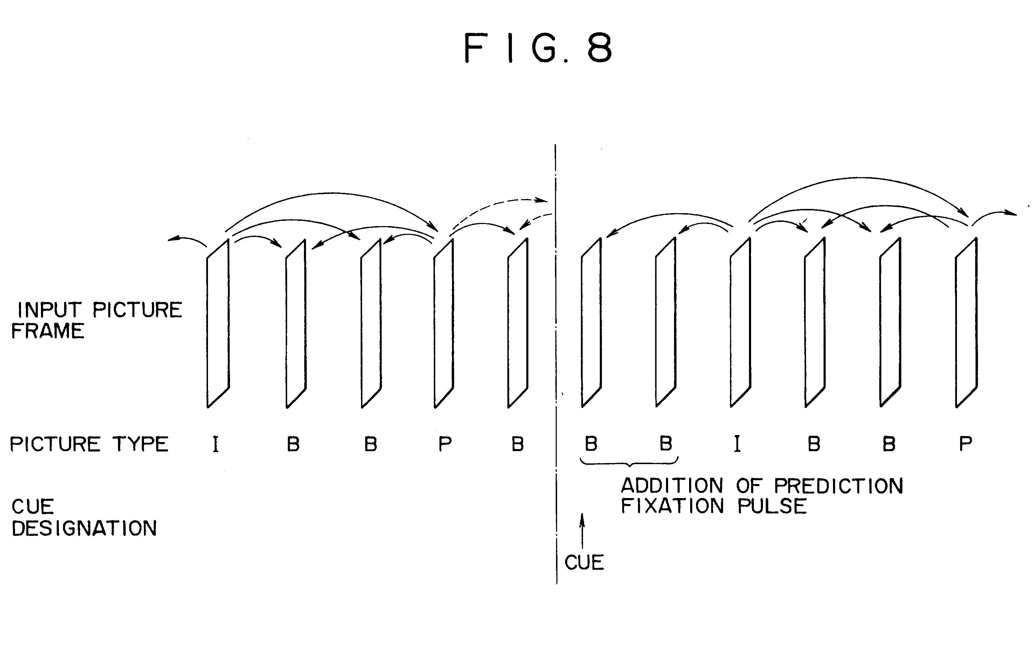

A control time code for a desired frame to be cut out is included in the control data in the RAM 10. When the time code inputted via the port 11 and the control time code in the RAM 10 coincide with each other, then the CPU 8 outputs a cue signal (or a cue signal is outputted from the external apparatus). This cue signal is supplied to the picture type production section 6 via the first delay circuit 14 and supplied to the DSP circuit 7 via the first and third delay circuits 14 and 16. Consequently, the picture type production section 6 outputs, after a resetting operation thereof, picture type data of a new data group as shown in FIG. 8. In this instance, a predictive fixation pulse is added to each of the first two B-pictures of the video type data by the picture type production section 6. The picture type data produced by the picture type production section 6 are supplied to the motion detection section 49 and the mode discrimination section 50 of the picture coding section 4 via the second delay circuit 15. Consequently, the motion detection section 49 and the mode discrimination section 50 operate based on the picture type data. The mode discrimination section 50 thus selects, for a frame of each B-picture to which the predictive fixation pulse is added, only backward prediction. Accordingly, in those frames, prediction is performed without using a frame of any other data group, and consequently, deterioration in picture quality can be reduced.

Further, the picture coding section 4 starts coding of the frame corresponding to the cue signal and outputs the coded picture signal. Meanwhile, the cue signal is inputted also to the DSP circuit 7. In response to the cue signal, the DSP circuit 7 controls the buffer memory 5 so that writing into the buffer memory 5 may be started and also reading out from the buffer memory 5 at a fixed bit rate may be started. Accordingly, a bit stream originating from the picture signal beginning with the frame corresponding to the cue signal is outputted from the buffer memory 5. Since the bit stream output always starts from the top of a new data group, no obstacle is made to decoding of the picture signal.

Further, when the cut out pictures are reproduced, since the buffer memory occupation amount at a starting point of time of the cut out picture signals is at the underflow threshold level, the possibility that the buffer memory may overflow is low.

Further, the present invention can be applied not only to cutting out of a picture. For example, if a time code of a frame at which a scene change occurs is written in a control time code of control data, then when the scene change frame comes, the apparatus is reset so as to subsequently handle a new data group. Consequently, deterioration in picture quality can be reduced. In particular, picture quality control can be performed without detection of a scene change, and by coding a picture sequence, which includes a scene change, without increasing I-pictures, each of which includes a large amount of information, the picture quality can be improved very much.

Having now fully described the invention, it will be apparent to one of ordinary skill in the art that many changes and modifications can be made thereto without departing from the spirit and scope of the invention as set forth herein.

## Claims

1. A picture compression method wherein picture type data representative of a prediction structure is allocated to each frame of a picture signal and coding including inter-frame predictive coding is performed based on the picture type data, characterized in that,
in response to a cue signal, picture type data for producing a data group which can be decoded independently of preceding frames are allocated to a subsequent frame or frames of the picture signal.

2. A picture compression method according to claim 1, characterized in that the picture type data represents an intra-picture, a predictive-picture or a bidirectionally predictive-picture.

3. A picture compression apparatus which includes a picture type production section (6) for allocating picture type data representative of a prediction structure to each frame of a picture signal, and a picture coding section (4) for performing coding of the picture signal including inter-frame predictive coding based on the picture type data, characterized in that,
in response to a cue signal, said picture type production section (6) allocates picture type data for producing a data group which can be decoded independently of preceding frames to a subsequent frame or frames of the picture signal.

4. A picture compression apparatus according to claim 3, characterized in that the picture type data represents an intra-picture, a predictive-picture or a bidirectionally predictive-picture.

5. A picture compression apparatus which includes a picture type production section (6) for allocating picture type data representative of a prediction structure to each frame of a picture signal, a picture coding section (4) for performing coding of the picture signal including inter-frame predictive coding based on the picture type data, a buffer memory (5) for storing a compressed picture signal from said picture coding section (4), and a buffer memory control section (7) for controlling writing into said buffer memory (5) and controlling reading out of said buffer memory (5) so that the compressed picture signal stored in said buffer memory (5) may be outputted as data of a fixed rate, characterized in that,
after a video clip coding mode is selected, said buffer memory control section (7) controls said buffer memory (5) so that a storage capacity of said buffer memory (5) is set to a minimum necessary level and said buffer memory control section (7) stops writing into and reading out of said buffer memory (5) and then stands by.

6. A picture compression apparatus according to claim 5, characterized in that, after a cue signal is outputted, when said picture compression apparatus is in the video clip coding mode, said picture type production section (6) allocates picture type data for producing a data group which can be decoded independently of preceding frames to a subsequent frame or frames of the picture signal.

7. A picture compression apparatus according to claim 5 or 6, characterized in that the picture type data represents an intra-picture, a predictive-picture or a bidirectionally predictive-picture.
